# EUROPÄISCHE PATENTANMELDUNG

(11) **EP 0 538 589 A1**
(43) Veröffentlichungstag der Anmeldung: **28.04.1993**
(21) Anmeldenummer: 92114665.0
(22) Anmeldetag: 27.08.1992
(51) Int. Cl.: G01S 3/781, G01J 3/12

(54) **Infrarot-Warnsystem**

(30) Priorität: 30.09.1991 DE 4132578
(71) Anmelder: SIEMENS AKTIENGESELLSCHAFT, D-80333 München (DE)
(72) Erfinder: Goeing, Friedrich, Dipl.-Ing., W-8021 Baierbrunn (DE)

(57) **Zusammenfassung**

Die Erfindung betrifft ein Verfahren zur Spektralanalyse für ein Infrarot-Warnsystem, bei dem das einfallende Infrarotlicht einem durchstimmbaren akustooptischen Filter zugeführt wird, und bei dem ein aus dem Filter austretendes Licht in einer Detektorzelle nach der Intensität ausgewertet wird.

## Beschreibung

Die Erfindung betrifft ein Verfahren und eine Vorrichtung zur elektronischen Spektralanalyse für ein Infrarot-Warnsystem.

Flugkörper erhalten ihre Antriebsenergie meist aus Fluiden oder Feststoffen. Jedes Antriebssystem strahlt Infrarotenergie in den Raum ab, deren spektrale Charakteristika von der Prozeßtemperatur und dem strahlenden Medium abhängen. Die dabei entstehenden Gase senden im angeregten Zustand ein diskontinuierliches Spektrum aus, das aus scharf begrenzten Linien besteht. Anhand der Lage und relativen Größe der Linien oder Maxima zueinander kann die jeweilige Infrarot-Strahlungsquelle passiv identifiziert werden.

Zukünftige Infrarot-Warnsysteme, insbesondere in fliegenden Plattformen, müssen Bedrohungen in einer Vielfalt von Ausstrahlungen entdecken und verfolgen. Die heute installierten Detektorsysteme können lediglich die Intensität und durch Peilung die Einfallsrichtung (in Azimuth und Elevation) von Infrarotsignalen feststellen, so daß die bei Flugantriebssystemen substratspezifische Wellenlängensignatur der unvermeidbaren Infrarotstrahlung nicht ausgewertet wird.

Zur Differenzierung unterschiedlicher Infrarot-Strahlungsquellen werden Breitbandsensoren mit vorgeschalteten Schmalbandfiltern verwendet, die das Spektrum an definierten Schwerpunktwellenlängen ausmessen.

Nachteilig ist zudem der durch die verwendete Drehspiegeltechnik sequenziell anfallende Datenstrom, weshalb kein wahlfreier Datenzugriff und damit keine wirksame Datenreduktion möglich sind.

Der Erfindung liegt die Aufgabe zugrunde ein Verfahren und eine Vorrichtung für ein Infrarot-Warnsystem anzugeben, bei dem eine Identifizierung der Flugkörper möglich ist.

Diese Aufgabe wird erfindungsgemäß durch die im Anspruch 1 bzw. 2 angegebenen Merkmale gelöst.

Durch das erfindungsgemäße Verfahren ist der Datenstrom bei der Verfolgung eines Flugkörpers reduzierbar.

Im folgenden wird die Erfindung anhand eines in der Zeichnung dargestellten Ausführungsbeispieles beschrieben. Dabei zeigen
- Fig. 1: eine schematische Darstellung der erfindungsgemäßen Vorrichtung, und
- Fig. 2: ein Diagramm zur Spektralanalyse.

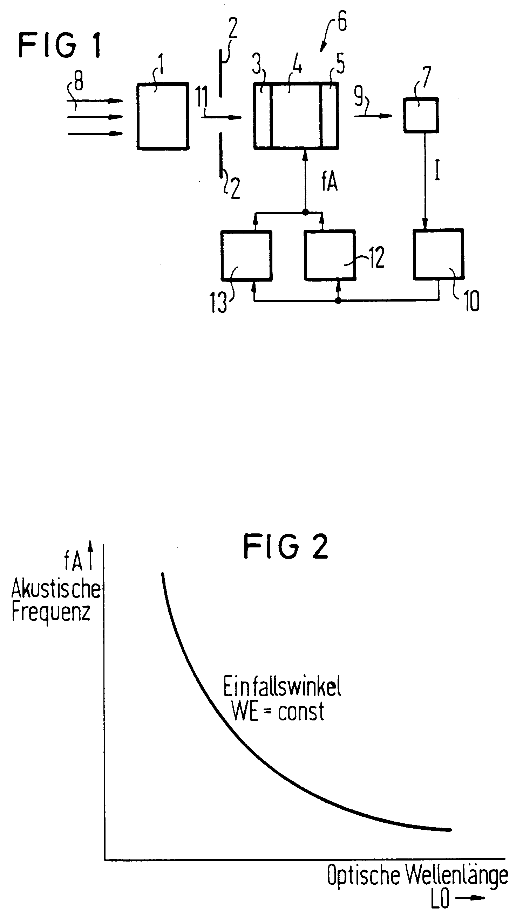

In Fig. 1 ist ein Drehspiegel 1 dargestellt, der in bekannter Weise zur Bestimmung von zwei Winkelablagen eines einfallenden infraroten Lichtes 8 verwendet wird. Hierzu wird vom Drehspiegel 1 ein Lichtstrahl 11 reflektiert und durch eine Richtungsblende 2 geschickt. Aufgrund der Position des Drehspiegels 1 können die Winkelablagen ermittelt werden. Die hierzu benötigte Steuerung ist nicht dargestellt, da sie für die Erfindung von untergeordneter Bedeutung ist. Die beiden Winkelablagen entsprechen dem Azimuth und der Elevation der Strahlenquelle.

Zur Spektralanalyse wird erfindungsgemäß ein durchstimmbares akustooptisches Filter 6 in Verbindung mit einer Detektorzelle 7 verwendet.

Das optisch durchstimmbare Filter 6 enthält den eigentlichen Filterbaustein 4, der durch einen akustooptischen Kristall realisiert ist. In einem solchen Kristall kommt es zur Interaktion von Licht- und Schallwellen durch die akustooptische Anregung. (Eine genauere Erklärung hierzu ist zu finden in dem Buch "Acousto-Optic Signal Processing", herausgegeben von Norman G. Berg and John N. Lee, insbesondere in Kapitel 6 von I.C.Chang.)

Die zur Erzeugung der Schallwellen mit einer akustischen Frequenz fA benötigte Wechselspannung im Ultraschallfrequenzbereich (10-150 MHz) wird von einem Rauschgenerator 12 oder einem VHF-Wobbelgenerator 13 geliefert. Die sich im Filterbaustein 4 ausbreitende Schallwelle wirkt für das einfallende Lichtbündel wegen der großen Geschwindigkeitsunterschiede wie ein optisches Gitter, bei dem die Gitterkonstante durch Variation der akustischen Frequenz fA geändert werden kann. In Abhängigkeit von der akustischen Frequenz fA ist das aus dem Filterbaustein 4 austretende Lichtbündel (9) gebeugt.

Dem Filterbaustein 4 ist eingangsseitig ein Polarisator 3 vor- und ausgangsseitig ein Analysator 5 nachgeschaltet. Der Polarisator 3 und der Analysator 5 sind vorgesehen zur Ausblendung von mehrdeutigen Lichtbrechungen aufgrund der zirkularen Polarisation des einfallenden Lichtes 11.

Der einfallende Lichtstrahl 11 besitzt gegenüber der Lotrechten auf der Eintrittsfläche des Polarisators 3 bzw. des Filterbausteines 4 einen Einfallswinkel WE, wird im Filter 6 gebeugt und gelangt als ausfallender Lichtstrahl 9 auf die Detektorzelle 7.

In dieser Detektorzelle 7 wird eine zu diesem Lichtstrahl 9 gehörende Intensität I gemessen und an eine Steuer- und Auswertestufe 10 gegeben. Von der Steuer- und Auswerterstufe werden der Rauschgeneratcr 12 und der VHF-Wobbelgenerator 13 gesteuert.

In einem ersten Betriebszustand, bei dem der Wobbelgenerator 13 die variierende akustische Frequenz fA an das Filter 6 gibt, wird das Spektrum des Lichtes 8 bzw. 11 mit hoher Wellenlängenauflösung durch die Detektorzelle 7 ausgemessen.

In Fig. 2 ist der Zusammenhang zwischen der eingestellten (sich ändernden) akustischen Frequenz fA und einer optischen Wellenlänge LO des infraroten Lichtes 8 dargestellt. Der Einfallswinkel WE für den Lichtstrahl 11 ist dabei konstant gehalten (WE=const.).

Durch die Verwendung einer empfindlichen Detektorzelle 7 ist eine hohe optische Auflösung gegeben, durch die eine sehr genaue Differenzierung unterschiedlicher Strahlungsquellen (beispielsweise durch Mustererkennung) möglich ist.

Die Forderung nach einer Reduktion der anfallenden großen Datenmenge ist durch eine Ausgestaltung des erfindungsgemäßen Verfahrens möglich.

Hierbei wird in einem zweiten Betriebszustand das optisch durchstimmbare Filter 6 mit dem Ausgangssignal des Rauschgenerators 12 angesteuert. Dies geschieht durch eine entsprechende Ansteuerung durch die Steuer- und Auswertestufe 10. Bei dieser Ansteuerung des Filters 6 wird die Empfangscharakteristik von Filter 6 in Verbindung mit der Detektorzelle 7 breitbandig. Jede Infrarot-Strahlungsquelle kann nun wie bei konventionellen Systemen detektiert werden.

Sobald ein Signal festgestellt wird, wird der Wobbelgenerator 13 von der Steuer- und Auswertestufe aktiviert, und der Rauschgenerator 12 abgeschaltet. In diesem ersten Betriebszustand wird das Spektrum des zu identifizierenden Objekts aufgenommen.

Wenn die spektralen Charakteristika der Strahlungsquelle festgestellt sind, so kann sich die weitere Auswertung auf die quasikontinuierliche Ausmessung dieser Charakteristika beschränken. Hierdurch kann der Datenstrom erheblich verringert werden. Durch diese "Datenreduktion durch Adaption" können auch mehrere IR-Quellen simultan verfolgt werden.

Zur Berücksichtigung der beiden atmosphärischen Fenster (3-5 µm und 8-12 µm) bei der Ausbreitung des infraroten Lichtes können auch zwei Filter 6 mit jeweils einer Detektorzelle 7 vorgesehen sein.

### Bezugszeichenliste

- 1: = Drehspiegel
- 2: = Richtungsblende
- 3: = Polarisator
- 4: = Filterbaustein
- 5: = Analysator
- 6: = durchstimmbares akustooptisches Filter (Acousto-Optic Tunable Filter)
- 7: = Detektorzelle
- 8: = infrarotes Licht
- 9: = austretender Lichtstrahl
- 10: = Steuer- und Auswertestufe
- 11: = einfallender Lichtstrahl
- 12: = Rauschgenerator
- 13: = VHF-Wobbelgenerator
- WE: = Einfallswinkel
- fA: = akustische Frequenz
- LO: = optische Wellenlänge
- I: = Intensität

## Patentansprüche

1. Verfahren zur Spektralanalyse für ein Infrarot-Warnsystem, bei dem das einfallende Infrarotlicht (11) einem durchstimmbaren akustooptischen Filter (6) mit einer variablen akustischen Frequenz (fA) zugeführt wird, und
bei dem ein aus dem Filter (6) austretendes Licht (9) in einer Detektorzelle (7) nach der Intensität (I) in Abhängigkeit von der akustischen Frequenz (fA) ausgewertet wird, so daß über die akustische Frequenz (fA) eine optische Wellenlänge (LO) bei konstantem Einfallswinkel (WE) des einfallenden Lichtes (11) bestimmbar ist.

2. Verfahren nach Anspruch 1,
bei dem die akustische Frequenz (fA) durch ein Rauschsignal erzeugt wird, so daß die Durchlaßcharakteristik des Filters (6) breitbandig wird.

3. Verfahren nach Anspruch 2,
bei dem durch Ansteuerung des Filters (6) mit dem Rauschsignal eine Infrarot-Strahlungsquelle detektiert wird, und bei dem anschließend eine detektierte Strahlungsquelle in ihrer spektralen Charakteristik vermessen wird, indem das durchstimmbare Filter (6) von einem Wobbel-Generator (13) angesteuert wird.

4. Vorrichtung zur Spektralanalyse für ein Infrarot-Warnsystem,
mit einem durchstimmbaren akustooptischen Filter (6), in dem das infrarote Licht gebeugt wird, und mit einer nachgeschalteten Detektorzelle (7) zur Bestimmung der Intensität (I) des gebeugten Lichtes.

5. Vorrichtung nach Anspruch 4,
mit einem VHF-Wobbelgenerator (13) zur Ansteuerung des Filters (6).

6. Vorrichtung nach Anspruch 4 oder 5,
mit einem Rauschgenerator (12) zur Ansteuerung des Filters (6).
